(19) Europäisches Patentamt
European Patent Office
Office européen des brevets

(11) Numéro de publication : **0 101 714**
**B1**

(12) **FASCICULE DE BREVET EUROPÉEN**

(45) Date de publication du fascicule du brevet : **27.05.87**

(51) Int. Cl.⁴ : **C 04 B 33/14**, C 04 B 41/00

(21) Numéro de dépôt : **83900843.0**

(22) Date de dépôt : **07.03.83**

(86) Numéro de dépôt international : **PCT/FR 83/00045**

(87) Numéro de publication internationale : **WO/8303093 (15.09.83 Gazette 83/21)**

# (54) PROCEDE DE FABRICATION DE CERAMIQUE DECOREE, EMAILLEE PAR MONOCUISSON, A L'AIDE DE GEOPOLYMERES SILICO-ALUMINATES.

(30) Priorité : **08.03.82 FR 8203810**

(43) Date de publication de la demande : **07.03.84 Bulletin 84/10**

(45) Mention de la délivrance du brevet : **27.05.87 Bulletin 87/22**

(84) Etats contractants désignés : **AT BE CH DE FR GB LI LU NL**

(56) Documents cités :
**EP-A- 0 026 687**
**FR-A- 1 578 849**
**FR-A- 2 314 158**
**FR-A- 2 489 291**

(73) Titulaire : **DAVIDOVICS, Michel**
**5 Chemin de Villers-St-Frambourg**
**F-60700 Pont-Sainte-Maxence (FR)**

***Davidovits, Joseph***
**16, rue Galilée**
**F-02100 Saint-Quentin (FR)**

(72) Inventeur : **DAVIDOVICS, Michel**
**5 Chemin de Villers-St-Frambourg**
**F-60700 Pont-Sainte-Maxence (FR)**
Inventeur : **Davidovits, Joseph**
**16, rue Galilée**
**F-02100 Saint-Quentin (FR)**

(74) Mandataire : **Kyle, Diana et al**
**ELKINGTON AND FIFE High Holborn House 52/54**
**High Holborn**
**London WC1V 6SH (GB)**

**EP 0 101 714 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé de fabrication de céramique émaillée, et plus particulièrement décorée par moyen mécanique, en supprimant la phase de fabrication du biscuit ou dégourdit, c'est-à-dire en monocuisson. On utilise avant la cuisson céramique proprement dite, une consolidation chimique de la pâte, par constitution d'un liant géopolymère minéral de type Poly(sialate)

```
(Na,K)(-Si-O-Al-O-)
        `O   `O
```

ou Poly(sialatesiloxo)

```
(Na,K)(-Si-O-Al-O-Si-O-)
         |    |    |
         O    O    O
```

Ces géopolymères sont les équivalents synthétiques des minéraux naturels connus sous le nom de zéolithes et feldspathoides.

L'objet principal de l'invention concerne l'utilisation de cette synthèse, à basse température, des minéraux zéolithes et feldspathoides, pour permettre la décoration par émaillage à l'aide de la monocuisson. Un objet secondaire réside dans les propriétés de fondant et d'amélioration du frittage des pâtes céramiques ainsi préparées. On a déjà décrit l'emploi de minéraux zéolithes dans le rôle de fondant, en particulier dans la revue russe « Steklo Kerami, 1981, n° 1, page 21-23 », traitant de l'utilisation de roches zéolithiques transcarpatiques comme fondant, favorisant le frittage, dans la fabrication de carreaux de sol. Dans ce cas, les produits naturels zéolithes n'ont pas le rôle essentiel décrit dans la présente invention, puisqu'ils ne constituent pas un liant avant la cuisson céramique proprement dite, mais ne sont que des charges inertes, jusque la phase vitreuse.

Le procédé normal de fabrication de céramique décorée et émaillée consiste tout d'abord à cuire à 900-1 200 °C, une première fois, l'objet céramique. On obtient alors un biscuit ou dégourdit. Puis on applique la décoration de façon manuelle ou mécanique, par impression ou décalcomanie, et l'objet est de nouveau porté à 900-1 200 °C pour l'opération d'émaillage. Cette technique est qualifiée de bicuisson et elle est pratiquement obligatoire lorsque l'on veut appliquer la décoration par un moyen mécanique. En effet, cette dernière exige que l'objet possède des caractéristiques mécaniques suffisantes pour supporter les efforts imposés par les machines. On estime, en général, que le matériau céramique doit avoir une résistante à la flexion au moins égale à 7-10MPa, pour supporter sans risque la décoration par moyen mécanique.

Dans le cas de la fabrication de carreaux de revêtement, on utilise parfois la technique de la monocuisson, c'est-à-dire sans passer par la phase du biscuit. Mais dans ce cas, la décoration est des plus simples, car la couche d'émail est très fine et simplement appliquée au pistolet, et il n'y a pas de possibilité réelle de décoration. Dans ce cas de la monocuisson traditionnelle, l'émail est appliqué après que le carreau ait subi la première sèche à 120 °C. La résistance à la flexion de ce carreau est trop faible, de l'ordre de 3 à 6 MPa, et il faut donc doubler ou tripler l'épaisseur pour arriver à une résistance mécanique tout juste suffisante. Mais un autre inconvénient, bien plus important, réside dans ce que l'émail en solution acqueuse est appliquée sur un support non cuit, donc très sensible à l'eau. Il est donc impératif d'utiliser des formulations spéciales d'émaux, plus onéreuses que les émaux traditionnels. Enfin un troisième inconvénient réside dans ce que l'émaillage se faisant sur un support non stabilisé, il se produit des déformations pendant les autres phases postérieures de la cuisson céramique ; le carreau ne reste pas plan.

On peut remédier à une partie des inconvénients de cette monocuisson, en incorporant, dans la pâte céramique, des liants organiques qui donnent au carreau, à vert, une bonne résistance mécanique, comme il est indiqué dans le brevet français n° 2 104 469 (71 30076) qui décrit l'utilisation de 1 à 3 % en poids de Poly(acétate) de vinyle pour augmenter de 25 à 30 % la résistance en cru de la porcelaine. Mais ceci n'empêche pas la sensibilité à l'eau, sauf si on emploie des concentrations en liant organique en général au-dessus de 5 % en poids de la pâte céramique. Ces liants organiques ont cependant l'inconvénient de se décomposer au cours de la cuisson et de produire des gaz qui perturbent l'émail et créent des bulles. L'utilisation de ces liants organiques impose donc une montée très lente en température, avec des paliers très longs dans les zones de décarbonisation entre 400 et 600 °C. On ne peut donc pas employer les fours modernes, à haut rendement, monocouche, dans lesquels la cuisson s'effectue entre 40 et 80 minutes à 1 120 °C par exemple.

L'emploi de liants minéraux évite cet inconvénient de production de gaz de décomposition. Cependant l'utilisation de liants à base de silicate alcalin soluble ($Na_2O$, $SiO_2$) et ($K_2O$, $SiO_2$) est délicate à cause d'une part de leur sensibilité à l'eau, et d'autre part du point de fusion relativement bas de ces produits, qui ramollissent déjà à partir de 550 °C jusque 750 °C, selon les compositions. Or comme il faut obtenir une résistance en vert relativement élevée pour supporter les opérations de décoration/émaillage, on est obligé d'employer des quantités relativement importantes de ces liants, entre 10 à 50 % (de

préférence entre 20 et 35 %) pour le silicate soluble en solution aqueuse, soit 5 à 25 % en poids sec, comme il est décrit dans le brevet français 2 111 050 (71 35963) dans la fabrication de carreaux céramiques légers avec cuisson à 1 000 °C. Cette pâte céramique contient donc énormément d'élément se ramollissant à basse température (inférieure à 750 °C) qui, au cours de la cuisson à plus haute température, migreront vers la surface, provoquant un auto-émaillage perturbateur. Il est donc nécessaire que le liant minéral, utilisé dans cette technique de monocuisson, ait un point de ramollissement de même nature, égal ou supérieur, à celui de la pâte céramique, c'est-à-dire au moins compris entre 950 et 1 100 °C.

La présente invention consiste dans un procédé de fabrication de céramique émaillée, par monocuisson, dans lequel l'application de l'émail est effectuée sur une céramique préalablement géopolymérisée à une température inférieure à 500 °C, la géopolymérisation consistant dans la formation d'un liant de type Poly(sialate)

```
(Na,K)(Si-O-Al-O-)
        |    |
        O    O
```

ou Poly(sialate siloxo)

```
(Na,K)(-Si-O-Al-O-Si-O-)
         |    |    |
         O    O    O
```

représentant la synthèse d'aluminosilicate de type zéolithe et/ou feldspathoide.

On connaît déjà l'emploi du Poly(sialate) de sodium, connu sous le nom d'Hydrosodalite, dans la fabrication de céramique dite sans cuisson, c'est-à-dire dont le durcissement s'effectue à des températures inférieures à 500 °C, le plus souvent entre 50 °C et 250 °C. Le Poly(sialate) de sodium

```
Na(Si-O-Al-O-)
    O    O
```

Hydrosodalite ($2SiO_2$, $Al_2O_3$, $Na_2O$, $4H_2O$) est obtenu directement sous l'action de cations $Na^+$ sur de la Kaolinite ($2SiO_2$, $Al_2O_3$, $4H_2O$) entre 50 °C et 250 °C comme il est décrit dans les brevets français n° 73 35979/74 00938/75 17337, dans la publication URSS « Des matériaux non cuits, à base de kaolin, pour les surfaces apparentes de bâtiments », Revue « Stroitel'nye materialy » n° 10, 1970, page 22, le brevet URSS n° 19 3335 du Bulletin des Inventions n° 6, 1967.

Dans la publication « Préparation de sodalite et de noséane à basse température à partir de minéraux phylliteux », Bulletin Français des Argiles tome XXII, pages 5-16 (1970) ou Compte Rendu Académie des Sciences, Paris t. 269 (1969), page 1367 par H. Besson, S. Caillère, S. Hénin le Poly(sialate) de Na, Hydrosodalite est également obtenu avec les autres minéraux phylliteux constituants naturels des argiles utilisées dans la fabrication des céramiques, comme : kaolinite, halloysite, montmorionite, pyrophyllite, muscovite. Le Brevet allemand RP n° 600327 déposé le 28 Mai 1932 décrit également la fabrication de céramique à basse température, avec utilisation vraisemblablement de la liaison par le Poly(sialate) de Na, Hydrosodalite. Le point de fusion du Poly(sialate) de Na, Hydrosodalite, est équivalent à celui de la néphéline ($Na_2O$, $Al_2O_3$, $2SiO_2$), c'est-à-dire voisin de 1 250 °C.

L'utilisation de géopolymères de type Poly(sialatesiloxo)

```
(Na,K)(Si-O-Al-O-Si-O-)
        |    |    |
        O    O    O
```

et de complexe géopolymérique

```
(K)(Si-O-Al-O-),(K2O,2SiO2)
     /    |
    O     O
```

comme liants de produits minéraux et fabrication d'objets céramiques à basse température, cette utilisation est décrite dans les Brevets français : 79 22041/80 18970/80 18971. Les géopolymères obtenus ont des structures proches des minéraux naturels connus sous le nom de zéolithes (analcime, phillipsite, gmellinite) ou feldspathoide (kaliophillite). Leurs points de ramollissement se situent dans la fourchette de 1 000 °C à 1 750 °C, selon la proportion $Na^+/K^+$ et $Al_2O_3/SiO_2$, ces températures de ramollissement ainsi que les eutectiques éventuels pouvant être facilement déterminés à l'aide des diagrammes ternaires ($K_2O$, $SiO_2$, $Al_2O_3$)/($Na_2O$, $SiO_2$, $Al_2O_3$) publiés dans les livres « Phase diagrams for ceramists », American Ceramic Society Inc. 1964/1969.

Le procédé selon l'invention utilise ces liants géopolymères non pas dans le but de fabriquer une céramique à basse température, comme il est déjà revendiqué dans tous les procédés cités, mais comme phase intermédiaire, permettant, avant la cuisson céramique proprement dite, de donner au produit en

cru, les caractéristiques mécaniques et physiques suffisantes pour supporter sans dommage la phase de décoration et d'émaillage à l'aide d'appareillage, et aussi de permettre l'utilisation rationnelle de nouveaux fours à cuisson rapide en monocouche (40 à 80 minutes de cuisson à 1 100-1 150 °C). La résistance à la flexion de la céramique géopolymérisée à une température comprise entre 20 °C et 500 °C, selon le type de liant utilisé et la caractéristique minéralogique de la pâte céramique, est d'au moins 20MPa pour un carreau comprimé à 200 bars.

Les exemples qui suivent permettent d'illustrer le procédé selon l'invention.

Exemple 1

On prend une formulation classique pour la fabrication de carreaux émaillés céramiques, constituée par :

| | |
|---|---|
| argile kaolinique blanche | 30 parties en poids |
| quartz (sable) | 40 |
| craie | 10 à 25 |
| poudre de verre | 15 à 5 |

On ajoute à ce mélange de poudres, les réactifs alcalins, de façon à ce que l'addition corresponde à 0,5 % à 3 % en poids (de préférence 0,5 % à 1,5 %) d'équivalent NaOH ou KOH libre. Le mélange obtenu est mouillé avec 6 à 10 % en poids d'eau, pour obtenir une pâte céramique semi-sèche, prête à être pressée, compression 200 à 300 bars. Les carreaux sont séchés en étuve pendant 1 h à 4 h à une température inférieure à 150 °C. Il y a géopolymérisation et formation de Poly(sialate) de Na ou de K, de type Hydrosodalite ou Kaliophillite, c'est-à-dire de céramique géopolymérisée.

On peut également employer des techniques de sèche rapide, comme par exemple en plaçant les carreaux pendant 5 minutes seulement dans une étuve à 400 °C, ou sous une rampe à Infrarouge (750 °C) pendant 1 minute. Contrairement à une pâte céramique traditionnelle, la pâte céramique selon l'invention n'explose pas lorsqu'on la soumet à ces conditions de séchage très rapide.

Après refroidissement, le carreau géopolymérisé est dur, solide, stable à l'eau. Il est alors décoré par sérigraphie mécanique et porté, après une courte sèche pour éliminer l'eau présente dans la sérigraphie, à 1 120 °C pendant 40 à 80 minutes dans un four à cuisson rapide monocouche. On obtient un carreau émaillé, décoré, identique à celui qui aurait été obtenu avec cette pâte céramique, mais par bi-cuisson.

Dans le cas où l'argile contient des complexes ferreux ou ferriques, on sait que la réaction de géopolymérisation ne peut avoir lieu que après transformation de $Fe(OH)_2$ en $Fe_2O_3$, c'est-à-dire à environ 240 °C-270 °C. La décoration par sérigraphie devra donc avoir lieu, seulement après cette phase de transformation.

Exemple 2

On reprend les mêmes matières premières céramiques de l'exemple 1, et on ajoute 7 % en poids d'eau et 5 % en poids d'un précondensat géopolymérique silico-aluminate, comme décrit dans les brevets français 79 22041/80 18970/80 18971, précondensat géopolymérique dont le rapport molaire des oxydes correspond à :

| | |
|---|---|
| $M_2O/SiO_2$ | 0,20 à 0,48 |
| $SiO_2/Al_2O_3$ | 3,3 à 4,5 |
| $H_2O/Al_2O_3$ | 10 à 25 |
| $M_2O/Al_2O_3$ | 0,8 à 1,6 |

dans lequel $M_2O$ représente soit $Na_2O$, soit $K_2O$, soit le mélange ($Na_2O$, $K_2O$).

La consolidation géopolymérique de type Poly(sialatesiloxo)

```
(Na,K)(Si-O-Al-O-Si-O-)
       |    |    |
       O    O    O
```

ou de type Complexe géopolymérique

```
(K)(Si-O-Al-O-),(K2O,2SiO2)
    |    |
    O    O
```

est obtenue à température ordinaire, ou est accélérée jusqu'à 80-90 °C. Le carreau géopolymérisé est décoré par sérigraphie et ensuite subit la cuisson céramique comme dans le cas de l'exemple 1.

Les exemples donnés portent sur l'utilisation de l'invention dans la réalisation de carreaux émaillés, par monocuisson. D'autres articles céramiques émaillés peuvent évidemment être fabriqués selon

l'invention.

**Revendications**

1. (modifié) Procédé de fabrication de céramique émaillée, par monocuisson, caractérisé en ce que l'application de l'émail est effectuée sur une céramique préalablement géopolymérisée à une température inférieure à 500 °C, la géopolymérisation consistant dans la formation d'un liant de type Poly(sialate)

```
(Na,K)(Si-O-Al-O-)
       O    O
```

ou Poly(sialate siloxo)

```
(Na,K)(-Si-O-Al-O-Si-O-)
        O    O    O
```

représentant la synthèse d'aluminosilicate de type zéolithe et/ou feldspathoide.

2. Procédé selon 1. caractérisé en ce que ladite céramique géopolymérisée est obtenue par synthèse de Poly(sialate) de type Hydrosodalite ou Kaliophilite, à une température au plus égale à 150 °C.

3. Procédé selon 2. caractérisé en ce que lorsque le matériau argileux contient des complexes de fer, ladite céramique géopolymérisée est obtenue à une température au moins égale à 240 °C.

4. Procédé selon 1. caractérisé en ce que ladite céramique géopolymérisée est obtenue par synthèse de Poly(sialate siloxo)

```
(Na,K)(-Si-O-Al-O-Si-O-)
        O    O    O
```

de type analcime ou zéolithe équivalente, à une température au plus égale à 95 °C.

5. Procédé selon 1. caractérisé en ce que ladite céramique géopolymérisée est obtenue par synthèse d'un complexe géopolymérique

$$\underset{\displaystyle\ \ O\ \ \ \ O}{(K)(Si\text{-}O\text{-}Al\text{-}O\text{-})}(K_2O,2SiO_2)$$

de type feldspathoide Kaliophillite ou équivalent, à une température au plus égale à 95 °C.

6. Procédé de fabrication de carreau céramique émaillé, consistant à préparer une pâte céramique semi-sèche contenant des réactifs alcalins libres, ou des réactifs silico-aluminates précondensats de géopolymérisation, puis à presser les carreaux, puis à passer à l'étuvage ces dits carreaux, en pile à une température inférieure à 150 °C pendant 1 h à 4 heures, puis à appliquer l'émail sur ces dits carreaux, puis à faire la cuisson céramique en monocuisson, à 1 050 °C-1 200 °C, en pile pendant 30 à 40 heures.

7. Procédé selon 6. caractérisé en ce que ledit étuvage est remplacé par un traitement rapide en 5 minutes, en monocouche, à 400 °C.

8. Procédé selon 6. caractérisé en ce que ladite cuisson céramique en monocuisson susceptible d'être en pile est remplacée par une monocuisson faite en monocouche, pendant 40 à 80 minutes à 1 100 °C-1 150 °C.

9. Produits céramiques émaillés, de toute forme et toute dimension, obtenus selon l'une quelconque des revendications 1 à 8.

**Claims**

1. A (modified) process for the production of enamelled ceramics, by means of single-firing, characterised in that the application of the enamel is effected onto ceramics which have been geopolymerised previously at a temperature lower than 500 °C, the geopolymerisation consisting of the formation of a bonding material of the following type Poly(sialate)

```
(Na,K)(Si-O-Al-O-)
       O    O
```

or Poly(sialate siloxo)

```
(Na,K)(-Si-O-Al-O-Si-O-)
        O    O    O
```

representing the synthesis of silicate of alumina of the zeolite and/or feldspathiod type.

2. A process according to 1 characterised in that the said geopolymerised ceramics are obtained by the synthesis of Poly(sialate) of the Hydrosodalite or Kaliophilite type, at a temperature equal to 150 °C at the most.

3. A process according to 2 characterised in that, when the argillaceous material contains iron complexes, the said geopolymerised ceramics are obtained at a temperature equal to 240 °C at least.

4. A process according to 1 characterised in that the said geopolymerised ceramics are obtained by the synthesis of Poly(sialate siloxo)

```
(Na,K)(-Si-O-Al-O-Si-O-)
         O    O    O
```

of the analcime type or the equivalent zeolite, at a temperature equal to 95 °C at the most.

5. A process according to 1 characterised in that the said geopolymerised ceramics are obtained by the synthesis of a geopolymer complex

$$(K)(\underset{O}{Si}-O-\underset{O}{Al}-O-)(K_2O,2SiO_2)$$

of the feldspathiod Kaliophilite type or the equivalent, at a temperature equal to 95 °C at the most.

6. A process for the production of enamelled ceramic tiles, consisting in the preparation of a semi-dry ceramic paste containing free alkaline reagents, or geopolymerisation precondensate aluminium silicate reagents, then in the pressing of the tiles, then in the oven-drying of these said tiles, in a stack at a temperature lower than 150 °C for 1 to 4 hours, then in the application of the enamel onto the said tiles, then in the ceramic firing process by means of single firing, at 1 050 °C to 1 200 °C, in a stack for 30 to 40 hours.

7. A process according to 6 characterised in that the said oven-drying is replaced by a rapid 5-minute treatment, in a unilayer, at 400 °C.

8. A process according to claim 6 characterised in that the said ceramic firing by means of single firing in a stack is replaced by single firing in a unilayer, for 40 to 80 minutes at 1 100 °C to 1 150 °C.

9. Enamelled ceramic products of any shape and any dimensions which are capable of being obtained according to any of claims 1 to 8.

**Patentansprüche**

1. Verfahren zur Herstellung emaillierter Keramik durch einmaliges Einbrennen, dadurch gekennzeichnet, daß das Aufbringen der Emaille auf eine Keramik erfolgt, die vorher bei einer Temperatur von weniger als 500 °C geopolymerisiert wurde, wobei die Geopolymerisation in der Bildung eines Bindemittels der Art Poly(sialat)

$$(Na,K)(\underset{O}{Si}-O-\underset{O}{Al}-O-)$$

oder Poly(sialatsiloxo)

```
(Na,K)(-Si-O-Al-O-Si-O-)
         O    O    O
```

besteht, die die Synthese eines zeolith- und/oder feldspatartigen Aluminosilikats repräsentiert.

2. Verfahren nach Anspruch 1, dadurch gekennzeichnet, daß die genannte geopolymerisierte Keramik durch Synthese eines hydrosodalith- oder kaliophyllitartigen Poly(sialats) bei einer Temperatur von höchetens 150 °C hergestellt wird.

3. Verfahren nach Anspruch 2, dadurch gekennzeichnet, daß wenn das tonartige Material Komplexe des Eisens enthält, die genannte geopolymerisierte Keramik bei einer Temperatur von mindestens 240 °C hergestellt wird.

4. Verfahren nach Anspruch 1, dadurch gekennzeichnet, daß die genannte geopolymerisierte Keramik durch Synthese analcim- oder äquivalenten zeolithartigen Poly(sialatsiloxos)

```
(Na,K)(-Si-O-Al-O-Si-O-)
         O    O    O
```

bei einer Temperatur von höchstens 95 °C hergestellt wird.

5. Verfahren nach Anspruch 1, dadurch gekennzeichnet, daß die genannte geopolymerisierte Keramik durch Synthese eines geopolymeren Komplexes

$$(K)(\underset{\substack{|\\O}}{Si}-O-\underset{\substack{|\\O}}{Al}-O-)(K_2O,2SiO_2)$$

nach der Art des Feldspates Kaliophyllit oder eines Äquivalents bei einer Temperatur von höchsten 95 °C hergestellt wird.

6. Verfahren zum Herstellen emaillierter Keramikkacheln oder -fliesen durch Zubereiten einer halbtrockenen keramischen Paste, die freie Alkalien oder Silicoaluminat-Vorkondensate der Geopolymerisation als reaktionsfähige Bestandteile enthält, Pressen der Kacheln oder Fliesen, Trocknen der Kacheln oder Fliesen im Stapel bei einer Temperatur von weniger als 150 °C während 1 bis 4 Stunden, Aufbringen der Emaille auf die Kacheln oder Fliesen und einmaliges Brennen der Keramik im Stapel für 30 bis 40 Stunden bei einer Temperatur von 1 050 bis 1 200 °C.

7. Verfahren nach Anspruch 6, dadurch gekennzeichnet, daß das Trocknen durch eine rasche Behandlung für 5 min bei 400 °C in einer einzigen Schicht ersetzt wird.

8. Verfahren nach Anspruch 6, dadurch gekennzeichnet, daß das einmalige Brennen der Keramik im Stapel ersetzt wird durch ein einmaliges Brennen in einer einzigen Schicht während 40 bis 80 min bei 1 100 bis 1 150 °C.

9. Emaillierte Keramikprodukte jeder Form und Abmessung, erhalten nach irgendeinem der Ansprüche 1 bis 8.